# FASCICULE DE BREVET EUROPEEN

(11) **EP 3 247 595 B1**
(45) Date de publication et mention de la délivrance du brevet: **19.03.2025**
(21) Numéro de dépôt: 15810740.9
(22) Date de dépôt: 17.12.2015
(51) Int. Cl.: B60S 1/08, B60R 11/04, B08B 3/02

(54) **DISPOSITIF DE NETTOYAGE D'UNE CAMERA D'AIDE A LA CONDUITE D'UN VEHICULE AUTOMOBILE**
VORRICHTUNG ZUR REINIGUNG EINER FAHRERASSISTENZKAMERA EINES KRAFTFAHRZEUGS
DEVICE FOR CLEANING A DRIVER ASSISTANCE CAMERA OF A MOTOR VEHICLE

(30) Priorité: 22.01.2015 FR 1550513
(43) Date de publication de la demande: 29.11.2017
(73) Titulaire: Valeo Systèmes d'Essuyage, 78322 Le Mesnil Saint Denis (FR)
(72) Inventeur: TREBOUET, Marcel, 78322 Le Mesnil Saint-Denis cédex (FR)
(74) Mandataire: Valeo Visibility
(86) Numéro de dépôt international: PCT/EP2015/080331
(87) Numéro de publication internationale: WO 2016/116231

(56) Documents cités:
- WO-A1-03/091069
- DE-A1- 102008 008 656
- KR-A- 20110 059 055
- US-A1- 2011 141 281

## Description

L'invention a trait au domaine de l'aide à la conduite et notamment aux caméras implantées sur certains véhicules. Plus particulièrement, l'invention a trait à un dispositif de nettoyage d'une telle caméra pour que la qualité de l'information d'aide à la conduite fournie au conducteur soit optimale.

Certains véhicules automobiles sont désormais équipés de moyens de prise de vue, et particulièrement de caméra, pour aider le conducteur notamment dans ses manœuvres de stationnement et/ou de marche arrière. On comprend que l'information fournie au conducteur par ces moyens de prise de vue est d'autant plus utile lorsque l'image acquise est nette.

On connaît des dispositifs de nettoyage qui comportent une tête de nettoyage mobile entre une position escamotée dans laquelle elle ne se trouve pas dans le champ de la caméra et ne gêne donc pas la prise de vue et une position active de nettoyage dans laquelle la tête est déployée pour se trouver en regard de la caméra et pouvoir projeter du liquide de nettoyage sur la lentille de la caméra. On pourra par exemple se référer aux documents DE102008008656, US2011/141281 ou DE10232227. Dans ce dernier, la caméra est fixe, logée dans un élément de structure du véhicule de sorte que la lentille de la caméra affleure avec la face extérieure de la paroi correspondante de l'élément de structure. La tête de nettoyage dans une position active de nettoyage est disposée en saillie de l'élément de structure et la projection du liquide de nettoyage peut éclabousser les passants à proximité du véhicule. Par ailleurs, la tête de nettoyage est petite et fragile, et elle est reliée à une structure déployable et à des câbles d'alimentation hydraulique. La mobilité de cet ensemble fragilise la tête de nettoyage et risque de faire casser à long terme les câbles d'alimentation. Le document KR20110059055-A décrit quant à lui un dispositif de nettoyage d'un boîtier de protection d'une caméra d'aide à la conduite au moyen d'une microfibre ou d'un élément en caoutchouc ou en silicone.

La présente invention s'inscrit dans ce contexte et elle a pour objectif de proposer un dispositif de nettoyage des caméras qui soit particulièrement efficace et qui évite notamment l'inconvénient présenté ci-dessus. Dans ce but, l'invention a pour objet un dispositif de nettoyage d'une lentille de caméra d'un véhicule automobile par l'intermédiaire d'une tête de nettoyage, dans lequel la caméra et la tête de nettoyage sont agencées de manière à être en regard dans une position de nettoyage dans la lentille et à être distante l'une de l'autre dans une position active de prise de vue.

Selon l'invention, définie par la revendication 1, le dispositif comporte une tête de nettoyage fixe, à l'abri d'un élément de structure du véhicule, et une caméra rendue mobile par l'intermédiaire de moyens d'entraînement. La tête est logée à l'abri d'un élément de structure du véhicule et les moyens d'entraînement sont aptes à générer un déplacement relatif de la caméra par rapport à la tête de nettoyage entre une position passive de prise de vue dans laquelle la caméra est disposée à l'abri dudit élément de structure du véhicule en regard de la tête de nettoyage, pour permettre l'éjection de liquide de nettoyage en direction de la lentille, et une position active dans laquelle la caméra est déployée à distance de l'élément de structure du véhicule pour permettre la prise de vue.

On peut observer que le dispositif selon l'invention présente une tête de nettoyage fixe et une caméra mobile entre une position de prise de vue et une position de nettoyage. Il est particulièrement intéressant selon l'invention que ce soit la caméra qui bouge, et que la tête de nettoyage, plus petite et donc plus fragile, soit fixe. Par ailleurs, le fait que la tête soit fixe à l'intérieur de la structure permet de protéger cette tête de nettoyage fragile, et cela permet en outre de proposer une position de nettoyage qui n'est pas à l'air libre, de sorte que la projection de liquide de nettoyage a lieu à l'intérieur de la structure du véhicule et ne crée pas d'éclaboussure des passants, ni de saletés ou de résidus de liquide de lavage sur la carrosserie externe du véhicule.

Selon l'invention, la caméra est bloquée en rotation lors du déplacement entre la position active de prise de vue et la position passive de prise de vue, pour la correcte orientation de la lentille, aussi bien pour recevoir le liquide de nettoyage projeté par les buses de pulvérisation, que pour réaliser une prise de vue correcte de la scène de route.

Selon différentes caractéristiques de l'invention, prises seules ou en combinaison :
- la tête de nettoyage comporte des moyens de raccordement à un tuyau d'alimentation de liquide de nettoyage et des moyens de pulvérisation par lesquels le liquide est apte à sortir de ladite tête en direction de la lentille dans ladite position active de la caméra ;
- la tête de nettoyage présente une face munie de buses formant les moyens de pulvérisation, ladite tête étant agencée de sorte que les buses sont orientées vers une zone dans laquelle la caméra est apte à prendre ladite position passive de prise de vue. Et la lentille est tournée vers les buses de nettoyage dans cette position de prise de vue passive.

Selon une série de caractéristiques avantageuse, prises seules ou en combinaison entre elles et avec les caractéristiques précédemment décrites, on peut également prévoir que :
- les moyens d'entrainement comportent un boîtier de support de la caméra, une tige rendue solidaire du boîtier et un actionneur apte à déplacer en translation la tige ;
- le boîtier présente un logement pour la caméra agencé de sorte que la lentille débouche d'une face du boîtier, une face distincte du boîtier servant de face de liaison avec la tige ;
- le boîtier comporte un capot prolongeant sensiblement perpendiculairement, dans au moins une direction, la face du boîtier opposée à la face de liaison avec la tige ;
- le boîtier comporte des moyens de guidage en déplacement longitudinal par rapport à l'actionneur, complémentaires de la tige.

Selon une autre série de caractéristiques, on peut prévoir que l'actionneur des moyens d'entraînement de la caméra est hydraulique. On peut prévoir dans ce cas que l'actionneur comporte un carter formant une chambre dans laquelle est apte à coulisser un piston, solidaire en déplacement de la caméra par l'intermédiaire de la tige qui est reliée à une extrémité au piston et qui sort du carter par un orifice réalisé dans une paroi dite proximale du carter pour être reliée au boîtier à l'autre extrémité, le piston coulissant sous l'effet de la pression d'un liquide injecté entre un orifice formé dans la paroi dite distale du carter de l'actionneur, ledit piston étant rappelé en position par un ressort logé dans ladite chambre entre le piston et la paroi proximale. Le liquide faisant pression sur le piston, et déplaçant la caméra, peut être du liquide de nettoyage apte à être utilisé pour le nettoyage de la lentille.

On peut également prévoir que le dispositif comporte des moyens de commande aptes à élaborer des instructions de commande de la tête de nettoyage en fonction de données d'entrée relatives d'une part à la position de la caméra et d'autre part à des conditions cycliques de nettoyage. L'instruction de commande de la tête de nettoyage pourra également être déclenchée si un dépassement d'un seuil de salissure est détecté par la caméra elle-même ou bien par l'utilisateur du véhicule.

L'invention concerne également un véhicule automobile comportant un dispositif de nettoyage d'une caméra tel qu'il vient d'être précédemment décrit.

Le dispositif de nettoyage prévoit de déplacer la caméra par rapport à la tête de nettoyage, et cette dernière est rendue fixe par rapport à la structure du véhicule automobile à l'intérieur de cette structure. La caméra est rendue mobile entre une position passive en regard de la tête de nettoyage, à l'intérieur de la structure du véhicule, et une position active de prise de vue, dégagée de la structure du véhicule.

Par position passive et active, on entend ici position passive et active de prise de vue, étant entendu que ces positions correspondent respectivement à une position active et passive de nettoyage de la caméra.

Dans un mode de mise en œuvre préféré de l'invention, la caméra apte à être nettoyée par ledit dispositif de nettoyage est une caméra de recul, disposée à l'arrière du véhicule et orientée pour prendre des vues d'une scène de route s'étendant à l'arrière du véhicule. L'invention trouve ainsi une application particulièrement avantageuse, mais non exclusive, dans le domaine de l'assistance au parking des véhicules automobiles. L'élément de structure à l'intérieur duquel est logée la tête de nettoyage est alors un bouclier pare-chocs arrière. L'invention concerne plus particulièrement un véhicule automobile, dans lequel la tête de nettoyage est rendue fixe à l'intérieur du bouclier pare-chocs arrière et dans lequel la caméra est apte à prendre une position active de prise de vue à l'extérieur du bouclier pare-chocs et une position passive de prise de vue à l'intérieur du bouclier pare-chocs, une ouverture étant prévue dans ledit bouclier pour permettre le passage de la caméra d'une position à l'autre.

Selon des caractéristiques particulières d'un tel véhicule, le bouclier pare-chocs arrière comporte une paroi supérieure sensiblement horizontale et une paroi frontale sensiblement verticale, et l'ouverture pour le passage de la caméra est réalisée dans la paroi supérieure. La caméra peut être surmontée d'un capot aux dimensions sensiblement égales à celles de l'ouverture, de manière à venir en recouvrement de ladite ouverture lorsque la caméra est en position passive de prise de vue. Et dans ce cas, on peut prévoir que les bords délimitant l'ouverture comportent une surface d'appui pour le capot en retrait de la face externe de la paroi supérieure qui prolonge.

L'invention concerne enfin un procédé de nettoyage d'une caméra de véhicule automobile, dans lequel on procède au nettoyage de ladite caméra par éjection de liquide depuis une tête de nettoyage, et dans lequel on génère dans un premier temps une instruction de déplacement de la caméra pour passer d'une position active où la caméra est dégagée de la structure du véhicule pour réaliser des prises de vue à une position passive où la tête de nettoyage est en regard de la caméra à l'intérieur de la structure, et dans un deuxième temps une instruction d'éjection de liquide par la tête de nettoyage lorsque simultanément la caméra est dans ladite position passive, et les conditions cycliques de déclenchement de nettoyage sont respectées.

D'autres caractéristiques et avantages de la présente invention apparaitront plus clairement à l'aide de la description et des figures parmi lesquelles :
- la figure 1 est une vue en perspective, vue de trois quart arrière, d'un dispositif de nettoyage selon l'invention dans une application préférée dans un bouclier pare-chocs arrière, ledit dispositif étant dans une position active de prise de vue dans laquelle une caméra du dispositif est déployée hors du bouclier, pour permettre la prise de vue ;
- la figure 2 est une vue de détail du dispositif de la figure 1, rendant particulièrement visible la caméra déployée hors du bouclier arrière du véhicule :
- la figure 3 est une vue de détail, similaire à celle de la figure 2, du dispositif dans une position passive de prise de vue avec la caméra escamotée dans la structure du véhicule ;
- la figure 4 est une vue de l'intérieur de la structure du véhicule, avec le dispositif dans la position passive de prise de vue, et dans laquelle sont rendus apparents la tête de nettoyage et le circuit d'alimentation en liquide associé, ainsi que les moyens d'entraînement de la caméra ;
- et les figures 5 et 6 sont des vues en coupe des moyens d'entraînement de la caméra dans respectivement une première position extrême et une deuxième position extrême.

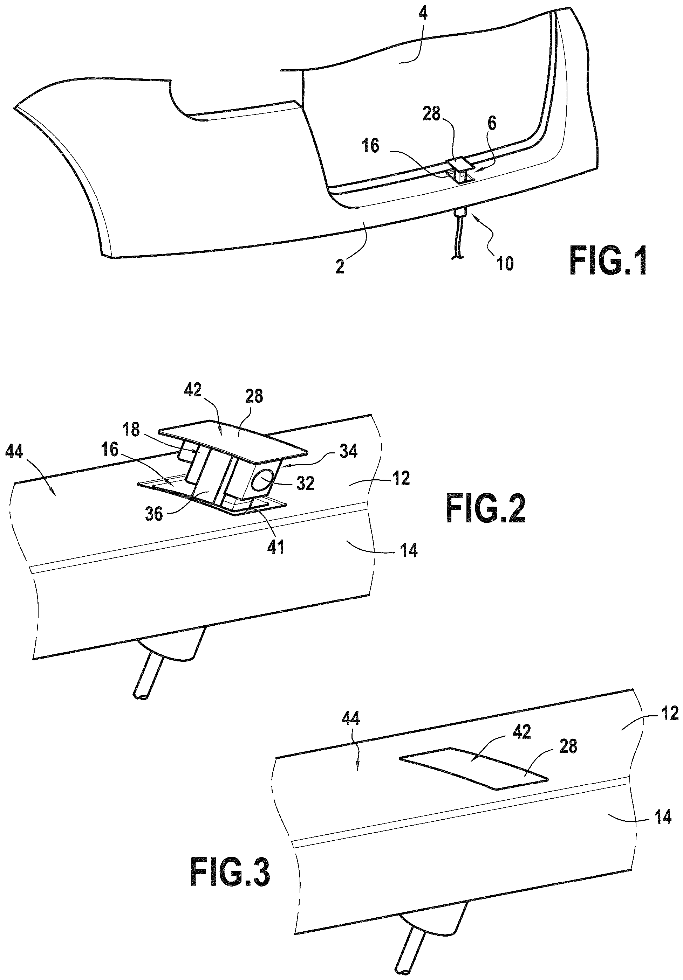

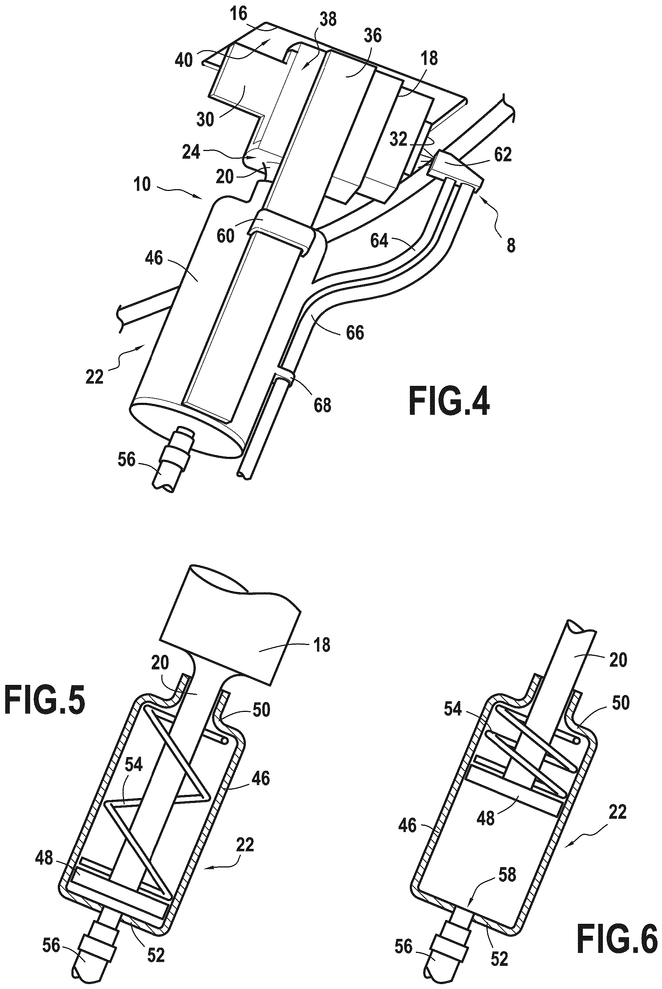

Un dispositif de nettoyage 1 selon l'invention est illustré sur les figures dans son application préférée, à savoir dans un système de caméra de recul disposée à l'arrière du véhicule, au voisinage d'un bouclier arrière 2 disposé transversalement notamment sous une porte de coffre arrière 4, tel que cela est visible sur la figure 1. Le dispositif comporte notamment une caméra 6 et une tête de nettoyage 8, ainsi que des moyens d'entraînement en translation 10 aptes à générer un déplacement relatif de la caméra par rapport à la tête de nettoyage, entre une position active de prise de vue (visible sur la figure 2), où la caméra est dégagée de la structure du véhicule pour réaliser des prises de vue de la scène de route située derrière le véhicule, et une position passive (visible sur les figures 3 et 4) où la caméra est escamotée dans la structure du véhicule, en regard de la tête de nettoyage restée fixe dans cette même structure de véhicule.

La caméra 6 forme des moyens de prise de vue d'une scène de route située indifféremment aux alentours du véhicule, et avantageusement derrière le véhicule pour donner une information au conducteur lorsque celui-ci recule. Dans ce cas, l'élément de structure est un bouclier pare-chocs arrière 2 qui comporte une paroi supérieure 12 sensiblement horizontale disposée directement sous la porte de coffre arrière, et une paroi frontale 14, sensiblement verticale, qui prolonge la paroi supérieure vers le bas.

Un dégagement interne est aménagé en retrait des parois du bouclier pour former logement desdites caméra et tête de nettoyage, et desdits moyens d'entraînement. Le bouclier présente dans ce contexte une ouverture 16 de communication entre le logement et l'extérieur du bouclier, de sorte que la caméra puisse passer à travers cette ouverture pour prendre une position active de prise de vue et reprendre ensuite sa position passive, escamotée dans le bouclier. Cette ouverture 16 est réalisée, dans le cas illustré sur les figures et tel que cela est notamment visible sur la figure 2, dans la paroi supérieure 12 du bouclier, par découpage de celle-ci. L'ouverture présente une forme sensiblement rectangulaire, dont les dimensions sont sensiblement supérieures aux dimensions d'un boîtier 18 à l'intérieur duquel est logée la caméra, de manière à permettre le passage de cette caméra à travers l'ouverture.

Le boîtier 18 fait partie des moyens d'entraînement 10 de la caméra. Il est monté au bout d'une tige 20, mise en mouvement par l'intermédiaire d'un actionneur 22 qui forme avec la tige et le boîtier lesdits moyens d'entraînement. Le boîtier présente une forme de cube relié sur une première face 24 à la tige, et dont une deuxième face, opposée à la première face et donc à la tige, est porteuse d'un capot 28 prolongeant sensiblement perpendiculairement, au moins dans deux directions, la deuxième face. Par ailleurs, le boîtier loge un objectif de caméra 30 qui présente une lentille 32 débouchant sur une troisième face 34 du boîtier perpendiculaire aux première et deuxième faces, et qu'il convient de nettoyer à une périodicité donnée, ou après chaque utilisation de la caméra de recul.

Le boîtier comporte également une patte de guidage 36, qui prend origine en surépaisseur d'une quatrième face 38 du boîtier et qui s'étend parallèlement à la tige 20 à distance de celle-ci. Dans le cas illustré, la patte de guidage présente une section rectangulaire, étant entendu qu'elle pourrait être d'une forme différente.

Sur la figure 3, on a représenté la caméra dans la position passive de prise de vue, escamotée à l'intérieur du bouclier, vue de l'extérieur du véhicule. Dans cette position, on observe que le capot 28 vient fermer l'ouverture 16 réalisée dans le bouclier 2. Il est en effet intéressant que ce capot réalise une fermeture étanche du bouclier de manière à éviter que de l'eau de pluie notamment puisse pénétrer dans le bouclier. A cet effet, le capot présentant des dimensions sensiblement égales à celles de l'ouverture, on prévoit des joints d'étanchéité (non visible sur les figures) sur la face interne 40 du capot tournée vers le bouclier, et l'on prévoit de former dans la paroi supérieure du bouclier au niveau des bords délimitant cette ouverture, sur tout le pourtour de celle-ci, un prolongement des bords vers l'intérieur de l'ouverture et en retrait de la face extérieure de la paroi supérieure pour former une surface d'appui pour le capot, de sorte que la face externe 42 du capot affleure avec la face externe 44 de la paroi supérieure du bouclier dans la position passive de prise de vue.

Les moyens d'entraînement 10 comportent le boîtier 18 dans lequel est logée la caméra, de sorte que le déplacement relatif entre la caméra et la tête de nettoyage est réalisé par le déplacement de la caméra. Tel que cela a été décrit précédemment, les moyens d'entraînement comportent, outre le boîtier, la tige 20 reliée au boîtier et l'actionneur 22.

La tige s'étend selon un axe de translation sensiblement perpendiculaire au plan dans lequel s'étend l'ouverture dans la paroi supérieure du bouclier, de sorte que le déplacement de la caméra à travers l'ouverture ne soit pas gêné. La tige est fixée à une première extrémité au boitier logeant la caméra de manière à être solidaire en déplacement de la caméra, et elle est fixée à sa deuxième extrémité à l'actionneur, qui l'entraîne en des déplacements en translation sensiblement verticale. Ceci génère des déplacements verticaux correspondants du boîtier et de la caméra.

L'actionneur des moyens d'entraînement en translation est apte à commander la translation de la caméra en éloignement et en rapprochement de la position escamotée dans laquelle la lentille est en regard de la tête de nettoyage. On va décrire par la suite un mode de réalisation particulièrement avantageux, dans lequel les moyens d'entraînement sont hydrauliques.

Dans le cas illustré, l'actionneur 22 comporte un carter 46 formant une chambre dans laquelle est apte à coulisser un piston 48 solidaire de la deuxième extrémité de la tige, sous l'effet de différences de pression créées par la présence de fluide hydraulique. On comprend que le piston est apte à coulisser sous l'effet de cette pression entre une première et une deuxième positions d'extrémités, l'une correspondant à la position passive de prise de vue, escamotée, de la caméra et l'autre correspondant à la position active de prise de vue de la caméra.

La chambre est délimitée par un cylindre creux, formé par une paroi circulaire et délimité longitudinalement par une première paroi dite proximale 50, tournée vers la caméra, et par une deuxième paroi dite distale 52. La paroi proximale est percée en son centre pour laisser passage à la tige qui relie le boîtier logeant la caméra au piston de l'actionneur logé à l'intérieur de la chambre. Des moyens d'étanchéité sont prévus entre cette ouverture dans la paroi proximale et la tige pour ne pas laisser fuir du liquide présent dans la chambre. Le piston 48 est logé dans la chambre et il présente une forme de disque de dimensions complémentaires de celles de la paroi circulaire, légèrement inférieures pour permettre son coulissement dans la chambre sans toutefois que du liquide puisse circuler entre le piston et la paroi circulaire.

Un ressort 54, de type ressort à spirale, est disposé entre la paroi proximale 50 et la face du piston tournée vers cette paroi proximale, enroulé autour de la tige. Le ressort est contraint de sorte qu'il tend à pousser le piston vers la paroi distale 52 lorsqu'aucun fluide n'exerce par ailleurs de pression sur le piston.

Un tuyau 56, dit d'approvisionnement en fluide de la chambre, est raccordé à la chambre de l'actionneur, au niveau d'un orifice 58 réalisé dans la paroi distale, de sorte que le fluide qui est injecté dans ce tuyau débouche dans la chambre entre la paroi distale et le piston en poussant le piston vers la paroi proximale. On comprend que dans le mode de réalisation illustré, l'évacuation de fluide a lieu par le même orifice que celui par lequel a lieu l'alimentation.

Tel que cela est visible sur la figure 4, la surface externe du carter de l'actionneur porte un passant 60 à l'intérieur duquel est apte à coulisser la patte de guidage 36 solidaire du boîtier 18. Le guidage du boîtier et de la caméra, par à la fois la tige et la patte de guidage, assure un déplacement exclusivement coulissant du boîtier par rapport à l'actionneur, empêchant la rotation du boîtier sur lui-même lors de son déplacement, de sorte que la lentille reste correctement orientée par rapport à la scène de route pour la prise de vue et par rapport à la tête de nettoyage.

Sur la figure 4 également, on a rendu visible la tête de nettoyage 8 qui comporte au moins une buse de pulvérisation 62 de liquide de nettoyage, tournée vers la caméra lorsque celle-ci est en position escamotée. Tel que cela a pu être précisé auparavant, la tête de nettoyage a une position fixe par rapport à la structure du véhicule, logée à l'intérieur du bouclier pare-chocs arrière quand l'application du dispositif est le nettoyage d'une caméra de recul. La tête de nettoyage est montée à l'extrémité d'un bras de support 64 relié à son autre extrémité au carter de l'actionneur 22, et le bras de support s'étend d'une part en éloignement transversal de l'axe de déplacement de la caméra pour ne pas gêner celui-ci, et d'autre part verticalement pour disposer la tête en regard de la lentille de la caméra lorsque la caméra est dans la position escamotée.

Dans une variante non représentée, le bras support est relié à un autre point fixe que le carter de l'actionneur, et par exemple directement sur la structure du bouclier. On comprend qu'il importe que la tête de nettoyage garde une position fixe au cours des déplacements de la caméra, et ce quel que soit l'endroit où elle est fixée. Toutefois, il convient de noter que dans l'exemple illustré, on diminue la chaine de côtes correspondant au positionnement relatif des buses de pulvérisation de liquide par rapport à la lentille à nettoyer, du fait de la fixation de la tête directement sur le carter de l'actionneur.

Par ailleurs, un tuyau d'alimentation hydraulique 66 est raccordé à la tête de nettoyage pour l'approvisionnement en liquide de nettoyage. Ce tuyau d'alimentation relie la tête de nettoyage à un réservoir de liquide de nettoyage prévu par ailleurs. La tête de nettoyage comporte un conduit interne, non visible sur les figures, pour conduire le liquide sortant du tuyau d'alimentation vers les buses de pulvérisation. Il pourrait être avantageux de prévoir un même réservoir de liquide pour la réalisation de la fonction d'approvisionnement hydraulique de la chambre de l'actionneur et pour l'alimentation en liquide pour le nettoyage de la lentille via le passage par la tête de nettoyage. Un module de commande détermine à quelle occasion doit être acheminé du liquide vers la tête, et dans quelles proportions. Notamment, le module de commande saura établir une instruction de mise en marche de la tête de nettoyage lorsque d'une part la caméra se trouve dans la position escamotée dans le bouclier pare-chocs arrière, et lorsque d'autre part les conditions cycliques de nettoyage sont respectées. Pour limiter l'encombrement du dispositif, le tuyau d'alimentation est ici bloqué dans un crochet 68 solidaire du carter de l'actionneur 22, et il est conformé pour suivre la courbure du bras de support.

On va tout d'abord décrire le dispositif de nettoyage de l'invention dans une position passive, notamment en se référant aux figures 4 et 5. Dans cette position passive, la caméra et la tête de nettoyage sont logées à l'intérieur de la structure du véhicule. La caméra a été amenée en regard de la tête de nettoyage, qui est elle restée fixe à l'intérieur du bouclier, et il est dès lors possible, sous l'effet d'une instruction de commande adéquate, de réaliser le nettoyage de la caméra.

En l'absence de fluide hydraulique dans la chambre de l'actionneur, le ressort logé à l'intérieur de la chambre pousse le piston dans une première position extrême, dans laquelle le piston est au plus proche de la paroi d'extrémité distale. Dans cette première position extrême, le piston est le plus éloigné possible de la paroi supérieure du bouclier pare-chocs à travers laquelle la caméra est apte à passer, et donc la caméra, rendue solidaire du déplacement du piston par l'intermédiaire de la tige et du boîtier, est également en retrait par rapport à cette paroi supérieure, dans une position telle que la lentille est en regard des buses de pulvérisation de la tête de nettoyage.

La position passive de prise de vue de la caméra, escamotée dans l'élément de structure du véhicule, est stable dès lors que le fluide injecté dans la chambre, via l'orifice réalisé dans la paroi distale, ne génère pas suffisamment de pression pour provoquer le déplacement du piston à l'encontre de l'effort de rappel du ressort. Et l'on peut observer que cette position passive de prise de vue ne génère pas automatiquement de nettoyage de la lentille, pour plusieurs raisons parmi lesquelles la possibilité qu'un nettoyage ait été réalisé précédemment sans que la caméra n'ait été rendue active entre temps, ou bien la possibilité qu'un nettoyage ait été réalisé il y a plusieurs cycles de déplacements de la caméra tout en restant sous le seuil déterminé de nombres de cycles à partir duquel il faut procéder au nettoyage.

On va maintenant décrire le fonctionnement du dispositif de nettoyage pour que celui-ci passe dans une position active en s'appuyant notamment sur les illustrations de la figure 6.

Lorsque l'on détecte une situation dans laquelle la caméra de recul va potentiellement être utilisée, par exemple lorsque l'embrayage est enclenché, un module de commande génère l'envoi de fluide à l'intérieur de la chambre via le tuyau d'approvisionnement. Le fluide crée une pression sur le piston en remplissant la chambre et il pousse sur le piston dans le sens de son éloignement de la paroi distale. Le déplacement longitudinal du piston entraîne le déplacement simultané de la caméra vers l'extérieur de la structure du véhicule, en dégagement de la tête de nettoyage qui elle reste fixe.

Le liquide pousse sur le piston en comprimant le ressort, et la partie de la chambre se remplissant de liquide, entre la paroi proximale et le piston en déplacement, continue à croître, jusqu'à une position déterminée qui correspond à la position active de prise de vue de la caméra. On sait déterminer la deuxième position extrême, c'est-à-dire à quelle distance de la paroi proximale doit se trouver le piston pour que, en fonction de la longueur de la tige et des dimensions du boîtier, la caméra soit dans la position adéquate pour la prise de vue sans être trop près et potentiellement gênée par le bouclier pare-chocs arrière et sans être à l'inverse trop sortie et en porte à faux. On sait ensuite déterminer la quantité de fluide à injecter dans la chambre pour atteindre cette position déterminée du piston en fonction de la raideur du ressort.

Le piston tend à reprendre sa place initiale et lorsque la prise de vue est effectuée, le module de commande génère une instruction de coupure de l'arrivée de fluide dans la chambre de sorte que le piston est repoussé contre la paroi distale en éjectant le fluide hors de la chambre par l'orifice, en sens inverse du sens d'alimentation. Le retour du piston vers la paroi distale génère le déplacement simultané de la caméra vers l'intérieur de l'élément de structure, et lorsque le piston est dans la première position extrême, sensiblement contre la paroi distale, la lentille de la caméra est en regard de la tête de nettoyage. Le module de commande peut alors générer une instruction d'alimentation de liquide de nettoyage vers la tête de nettoyage. Lorsque la caméra est en position passive de prise de vue, c'est-à-dire lorsqu'elle se trouve escamotée dans la structure et en regard de la tête de nettoyage, l'opération de nettoyage peut ne pas être systématique pour économiser notamment du liquide de nettoyage. Le nettoyage pourra avantageusement être commandé à la double condition d'une présence de la caméra en position passive de prise de vue et d'une périodicité de nettoyage préalablement définie arrivant à terme.

La description qui précède explique clairement comment l'invention permet d'atteindre les objectifs qu'elle s'est fixés et notamment de proposer un dispositif de nettoyage dans lequel la mobilité relative entre une caméra et une tête de nettoyage associée est réalisée par la mobilité de la caméra et une position fixe de la tête de nettoyage, et dans lequel la zone dans laquelle a lieu le nettoyage de la caméra est disposée à l'abri d'un élément de structure pour éviter des éclaboussures à l'extérieur du véhicule.

Bien entendu, diverses modifications peuvent être apportées par l'homme du métier aux structures du dispositif de nettoyage, qui viennent d'être décrites à titre d'exemples non limitatifs, dès lors que l'on permet un déplacement relatif d'une caméra de prise de vue pour l'aide à la conduite d'un véhicule par rapport à une tête de nettoyage, pour passer d'une position passive de prise de vue dans laquelle la tête de nettoyage et la caméra sont regroupées pour permettre une opération de nettoyage à une position active dans laquelle elles sont écartées l'une de l'autre avec la tête de nettoyage restant à l'abri de la structure du véhicule et la caméra déployée hors de la structure du véhicule pendant un temps réduit correspondant à la durée de la prise de vue. Le mode de réalisation qui a été décrit en détails ci-dessus n'est pas limitatif de l'invention. En tout état de cause, l'invention ne saurait se limiter au mode de réalisation spécifiquement décrit dans ce document, et s'étend en particulier à tous moyens équivalents et à toute combinaison techniquement opérante de ces moyens.

Ainsi, des variantes non représentées sont prévues et certaines sont décrites ci-dessous, sans toutefois que cette liste soit pour autant exhaustive :
- on pourra prévoir que les moyens d'entraînement comportent un actionneur hydraulique ou électrique qui assure le déplacement en translation de la caméra ;
- on pourra prévoir que les conditions de déclenchement du nettoyage de la lentille de la caméra soient distinctes de celles décrites précédemment, et notamment que le liquide soit amené vers la tête de nettoyage simultanément à un nettoyage de la vitre arrière du véhicule.

## Revendications

1. Dispositif de nettoyage d'une lentille (32) de caméra (6) d'aide à la conduite d'un véhicule automobile par l'intermédiaire d'une tête de nettoyage (8), dans lequel la caméra et la tête de nettoyage sont agencées de manière à être en regard dans une position de nettoyage de la lentille et à être distantes l'une de l'autre dans une position active de prise de vue, le dispositif de nettoyage comportant une tête de nettoyage fixe et une caméra rendue mobile par l'intermédiaire de moyens d'entraînement (10), la tête étant logée à l'abri d'un élément de structure (2) du véhicule et les moyens d'entraînement étant aptes à générer un déplacement en translation relatif de la caméra par rapport à la tête de nettoyage entre une position passive de prise de vue dans laquelle la caméra est disposée à l'abri dudit élément de structure du véhicule en regard de la tête de nettoyage, et une position active dans laquelle la caméra est déployée à distance de l'élément de structure du véhicule pour permettre la prise de vue, la tête de nettoyage comportant au moins une buse de pulvérisation de liquide de nettoyage, tournée vers la caméra lorsque celle-ci est dans la position passive de prise de vue, la caméra (6) étant bloquée en rotation lors du déplacement entre la position active de prise de vue et la position passive de prise de vue, pour la correcte orientation de la lentille (32).

2. Dispositif de nettoyage selon la revendication 1, **caractérisé en ce que** la tête de nettoyage (8) comporte des moyens de raccordement à un tuyau d'alimentation (66) de liquide de nettoyage et des moyens de pulvérisation (62) par lesquels le liquide est apte à sortir de ladite tête en direction de la lentille (32) dans ladite position passive de la caméra (6).

3. Dispositif de nettoyage selon la revendication 2, **caractérisé en ce que** la tête de nettoyage (8) présente une face munie de buses (62) formant les moyens de pulvérisation, ladite tête étant agencée de sorte que les buses sont orientées vers une zone dans laquelle la caméra (6) est apte à prendre ladite position passive de prise de vue.

4. Dispositif de nettoyage selon l'une des revendications précédentes, **caractérisé en ce que** les moyens d'entrainement (10) comportent un boîtier (18) de support de la caméra (6), une tige (20) rendue solidaire du boîtier et un actionneur (22) apte à déplacer en translation la tige.

5. Dispositif de nettoyage selon la revendication précédente, **caractérisé en ce que** le boîtier (18) présente un logement pour la caméra agencé de sorte que la lentille (32) débouche d'une face (34) du boîtier, une face distincte (24) du boîtier servant de face de liaison avec la tige (20).

6. Dispositif de nettoyage selon la revendication 5, **caractérisé en ce que** le boîtier (18) comporte un capot (28) prolongeant sensiblement perpendiculairement, dans au moins une direction, la face du boîtier opposée à la face de liaison (24) avec la tige (20).

7. Dispositif de nettoyage selon l'une des revendications 5 ou 6, **caractérisé en ce que** le boîtier (18) comporte des moyens de guidage (36, 60) en déplacement longitudinal par rapport à l'actionneur, complémentaires de la tige (20).

8. Dispositif de nettoyage selon l'une des revendications 4 à 7, **caractérisé en ce que** l'actionneur (22) des moyens d'entraînement (10) de la caméra (6) est hydraulique.

9. Dispositif de nettoyage selon la revendication précédente, **caractérisé en ce que** l'actionneur (22) comporte un carter (46) formant une chambre dans laquelle est apte à coulisser un piston (48), solidaire en déplacement de la caméra par l'intermédiaire de la tige (20) qui est reliée à une extrémité au piston et qui sort du carter par un orifice réalisé dans une paroi dite proximale (50) du carter pour être reliée au boîtier à l'autre extrémité, sous l'effet de la pression d'un liquide injecté entre un orifice formé dans la paroi dite distale (52) du carter de l'actionneur, ledit piston étant rappelé en position par un ressort (54) logé dans ladite chambre entre le piston et la paroi proximale.

10. Dispositif de nettoyage selon la revendication 9, **caractérisé en ce que** le liquide faisant pression sur le piston (48), et déplaçant la caméra (6), est du liquide de nettoyage apte à être utilisé pour le nettoyage de la lentille.

11. Véhicule automobile comportant un dispositif de nettoyage selon l'une des revendications précédentes, dans lequel la tête de nettoyage (8) est rendue fixe par rapport à la structure du véhicule automobile, à l'intérieur de celle-ci, et dans lequel la caméra (6) est rendue mobile entre une position passive de prise de vue, escamotée à l'intérieur de la structure du véhicule de manière à être en regard de la tête de nettoyage, et une position active de prise de vue, dans laquelle la caméra est déployée hors de la structure.

12. Véhicule automobile selon la revendication précédente, **caractérisé en ce que** la caméra apte à être nettoyée par ledit dispositif de nettoyage est une caméra de recul, disposée à l'arrière du véhicule et orientée pour prendre des vues d'une scène de route s'étendant à l'arrière du véhicule, la tête de nettoyage (8) étant rendue fixe à l'intérieur du bouclier pare-chocs arrière (2) et la caméra (6) étant apte à prendre une position active de prise de vue à l'extérieur du bouclier pare-chocs et une position passive de prise de vue à l'intérieur du bouclier pare-chocs, une ouverture (16) étant prévue dans ledit bouclier pour permettre le passage de la caméra d'une position à l'autre.

13. Véhicule automobile selon la revendication précédente, **caractérisé en ce que** le bouclier pare-chocs arrière (2) comporte une paroi supérieure (12) sensiblement horizontale et une paroi frontale (14) sensiblement verticale, l'ouverture (16) pour le passage de la caméra (6) étant réalisée dans ladite paroi supérieure.

14. Véhicule automobile selon la revendication précédente, **caractérisé en ce que** la caméra (6) est surmontée d'un capot (28) aux dimensions sensiblement égales à celles de l'ouverture (16), de manière à venir en recouvrement de ladite ouverture lorsque la caméra est en position passive de prise de vue.

15. Véhicule automobile selon la revendication précédente, **caractérisé en ce que** les bords délimitant l'ouverture (16) comportent une surface d'appui pour le capot en retrait de la face externe de la paroi supérieure qui prolonge.

## Patentansprüche

1. Vorrichtung zur Reinigung einer Linse (32) einer Fahrerassistenzkamera (6) eines Kraftfahrzeugs durch einen Reinigungskopf (8), wobei die Kamera und der Reinigungskopf derart eingerichtet sind, dass sie in einer Reinigungsposition der Linse einander gegenüberliegen und in einer aktiven Aufnahmeposition voneinander entfernt sind, wobei die Reinigungsvorrichtung einen ortsfesten Reinigungskopf und eine durch Antriebsmittel (10) bewegbar angebrachte Kamera umfasst, wobei der Kopf unter dem Schutz eines Strukturelements (2) des Fahrzeugs angeordnet ist und die Antriebsmittel geeignet sind, eine relative translatorische Bewegung der Kamera in Bezug auf den Reinigungskopf zu erzeugen, zwischen einer passiven Aufnahmeposition, in der die Kamera unter dem Schutz des Strukturelements des Fahrzeugs gegenüber dem Reinigungskopf angeordnet ist, und einer aktiven Position, in der die Kamera in einen Abstand von dem Strukturelement des Fahrzeugs gebracht ist, um die Aufnahme zu ermöglichen, wobei der Reinigungskopf mindestens eine Düse zur Zerstäubung von Reinigungsflüssigkeit umfasst, die der Kamera zugewandt ist, wenn diese sich in der passiven Aufnahmeposition befindet, wobei die Kamera (6) während der Bewegung zwischen der aktiven Aufnahmeposition und der passiven Aufnahmeposition gegen Verdrehen gesichert ist, für die korrekte Ausrichtung der Linse (32).

2. Reinigungsvorrichtung nach Anspruch 1, **dadurch gekennzeichnet, dass** der Reinigungskopf (8) Mittel zum Anschluss an einen Zuführschlauch (66) für Reinigungsflüssigkeit und Zerstäubungsmittel (62), durch welche die Flüssigkeit aus dem Kopf in Richtung der Linse (32) in der passiven Position der Kamera (6) austreten kann, umfasst.

3. Reinigungsvorrichtung nach Anspruch 2, **dadurch gekennzeichnet, dass** der Reinigungskopf (8) eine Seite aufweist, die mit Düsen (62) ausgestattet ist, welche die Zerstäubungsmittel bilden, wobei der Kopf so angeordnet ist, dass die Düsen auf einen Bereich gerichtet sind, in dem die Kamera (6) die passive Aufnahmeposition einnehmen kann.

4. Reinigungsvorrichtung nach einem der vorhergehenden Ansprüche, **dadurch gekennzeichnet, dass** die Antriebsmittel (10) einen Kasten (18) zur Halterung der Kamera (6), eine mit dem Kasten fest verbundene Stange (20) und einen Aktuator (22), der geeignet ist, die Stange translatorisch zu bewegen, umfassen.

5. Reinigungsvorrichtung nach dem vorhergehenden Anspruch, **dadurch gekennzeichnet, dass** der Kasten (18) eine Aufnahme für die Kamera aufweist, die derart ausgebildet ist, dass die Linse (32) auf einer Seite (34) des Kastens mündet, wobei eine andere Seite (24) des Kastens als Seite zur Verbindung mit der Stange (20) dient.

6. Reinigungsvorrichtung nach Anspruch 5, **dadurch gekennzeichnet, dass** der Kasten (18) eine Haube (28) umfasst, welche die Seite des Kastens, die der Seite zur Verbindung (24) mit der Stange (20) gegenüberliegt, in mindestens einer Richtung im Wesentlichen senkrecht verlängert.

7. Reinigungsvorrichtung nach einem der Ansprüche 5 oder 6, **dadurch gekennzeichnet, dass** der Kasten (18) Mittel zur Führung (36, 60) der Längsbewegung in Bezug auf den Aktuator umfasst, die zur Stange (20) komplementär sind.

8. Reinigungsvorrichtung nach einem der Ansprüche 4 bis 7, **dadurch gekennzeichnet, dass** der Aktuator (22) der Antriebsmittel (10) der Kamera (6) hydraulisch ist.

9. Reinigungsvorrichtung nach dem vorhergehenden Anspruch, **dadurch gekennzeichnet, dass** der Aktuator (22) ein Gehäuse (46) umfasst, das eine Kammer bildet, in welcher ein Kolben (48), der mit der Kamera durch die Stange (20) bewegungsfest verbunden ist, die an einem Ende mit dem Kolben verbunden ist und die aus dem Gehäuse durch einen in einer proximal genannten Wand (50) des Gehäuses ausgebildeten Durchlass austritt, um am anderen Ende mit dem Kasten verbunden zu sein, unter der Wirkung des Drucks einer Flüssigkeit gleiten kann, die durch einen in der distal genannten Wand (52) des Gehäuses ausgebildeten Durchlass des Aktuators eingespritzt wird, wobei der Kolben durch eine Feder (54) zurückgeholt wird, die in der Kammer zwischen dem Kolben und der proximalen Wand aufgenommen ist.

10. Reinigungsvorrichtung nach Anspruch 9, **dadurch gekennzeichnet, dass** die Flüssigkeit, die Druck auf den Kolben (48) ausübt und die Kamera (6) bewegt, Reinigungsflüssigkeit ist, die geeignet ist, für die Reinigung der Linse verwendet zu werden.

11. Kraftfahrzeug, welches eine Reinigungsvorrichtung nach einem der vorhergehenden Ansprüche umfasst, wobei der Reinigungskopf (8) in Bezug auf die Struktur des Kraftfahrzeugs im Inneren derselben ortsfest angebracht ist und wobei die Kamera (6) zwischen einer passiven Aufnahmeposition, eingezogen ins Innere der Struktur des Fahrzeugs, so dass sie dem Reinigungskopf gegenüberliegt, und einer aktiven Aufnahmeposition, in der die Kamera aus der Struktur ausgefahren ist, bewegbar angebracht ist.

12. Kraftfahrzeug nach dem vorhergehenden Anspruch, **dadurch gekennzeichnet, dass** die Kamera, die durch die Reinigungsvorrichtung reinigbar ist, eine Rückfahrkamera ist, die hinten am Fahrzeug angeordnet ist so ausgerichtet ist, dass sie Ansichten einer sich hinter dem Fahrzeug erstreckenden Straßenszene aufnehmen kann, wobei der Reinigungskopf (8) im Inneren des hinteren Stoßfängers (2) ortsfest angebracht ist und die Kamera (6) geeignet ist, eine aktive Aufnahmeposition außerhalb des Stoßfängers und eine passive Aufnahmeposition innerhalb des Stoßfängers einzunehmen, wobei eine Öffnung (16) im Stoßfänger vorgesehen ist, um die Hindurchbewegung der Kamera von einer Position zur anderen zu ermöglichen.

13. Kraftfahrzeug nach dem vorhergehenden Anspruch, **dadurch gekennzeichnet, dass** der hintere Stoßfänger (2) eine im Wesentlichen horizontale obere Wand (12) und eine im Wesentlichen vertikale Stirnwand (14) umfasst, wobei die Öffnung (16) für die Hindurchbewegung der Kamera (6) in der oberen Wand ausgebildet ist.

14. Kraftfahrzeug nach dem vorhergehenden Anspruch, **dadurch gekennzeichnet, dass** die Kamera (6) von einer Haube (28) mit Abmessungen überragt wird, die im Wesentlichen gleich denjenigen der Öffnung (16) sind, so dass sie die Öffnung überdeckt, wenn sich die Kamera in der passiven Aufnahmeposition befindet.

15. Kraftfahrzeug nach dem vorhergehenden Anspruch, **dadurch gekennzeichnet, dass** die Ränder, welche die Öffnung (16) begrenzen, eine Auflagefläche für die Haube umfassen, die tiefer als die Außenseite der oberen Wand liegt, die sie verlängert.

## Claims

1. A device for cleaning a lens (32) of a driving assistance video camera (6) of a motor vehicle by means of a cleaning head (8), in which the video camera and the cleaning head face each other in a position for cleaning the lens and are at a distance from each other in an active imaging position, the device for cleaning including a fixed cleaning head and a video camera that can be moved by driving means (10), the head being housed in a structural element (2) of the vehicle and the driving means being adapted to generate a movement of the video camera relative to the cleaning head between a passive position in which the video camera is housed in said structural element of the vehicle facing the cleaning head and an active position in which the video camera is deployed at a distance from the structural element of the vehicle to enable imaging, the device for cleaning including at least one cleaning liquid spray nozzle facing the camera when the latter is in the passive image-taking position, the video camera (6) being immobilized in rotation during the movement between the active imaging position and the passive position to orient the lens (32) correctly.

2. The cleaning device as claimed in claim 1, **characterized in that** the cleaning head (8) includes means for connecting it to a cleaning liquid feed pipe (66) and spraying means (62) via which the liquid is able to exit said head in the direction of the lens (32) in said passive position of the video camera (6).

3. The cleaning device as claimed in claim 2, **characterized in that** the cleaning head (8) has a face with nozzles (62) forming the spraying means, said head being arranged so that the nozzles are oriented toward a zone in which the video camera (6) is able to adopt said passive position.

4. The cleaning device as claimed in any one of the preceding claims, **characterized in that** the driving means (10) include a casing (18) supporting the video camera (6), a rod (20) fastened to the casing and an actuator (22) adapted to move the rod in translation.

5. The cleaning device as claimed in the preceding claim, **characterized in that** the casing (18) has a housing for the video camera such that the lens (32) gives onto a face (34) of the casing, a separate face (24) of the casing serving as the face for connection to the rod (20).

6. The cleaning device as claimed in claim 5, **characterized in that** the casing (18) includes a cap (28) extending substantially perpendicularly in at least one direction the face of the casing opposite the face (24) for connection to the rod (20).

7. The cleaning device as claimed in either one of claims 5 or 6, **characterized in that** the casing (18) includes means (36, 60) for guiding complementary longitudinal movement of the rod (20) relative to the actuator.

8. The cleaning device as claimed in any one of claims 4 to 7, **characterized in that** the actuator (22) of the driving means (10) of the video camera (6) is a hydraulic actuator.

9. The cleaning device as claimed in the preceding claim, **characterized in that** the actuator (22) includes an enclosure (46) forming a chamber in which can slide a piston (48) constrained to move with the video camera by means of the rod (20) that is connected at one end to the piston and that exits the enclosure via an orifice in a wall termed the proximal wall (50) of the enclosure to be connected to the casing at the other end, the piton sliding because of the pressure of a liquid injected into an orifice in a wall termed the distal wall (52) of the enclosure of the actuator, said piston being urged into position by a spring (54) housed in said chamber between the piston and the proximal wall.

10. The cleaning device as claimed in claim 9, **characterized in that** the liquid applying pressure to the piston (48) and moving the video camera (6) is the cleaning liquid used for cleaning the lens.

11. A motor vehicle including a cleaning device as claimed in any one of the preceding claims, in which the cleaning head (8) is fixed relative to the structure of the motor vehicle, inside the latter, and in which the video camera (6) is mobile between a passive position, retracted inside the structure of the vehicle so as to face the cleaning head, and an active imaging position, in which the video camera is deployed outside the structure.

12. The motor vehicle as claimed in the preceding claim, **characterized in that** the video camera adapted to be cleaned by said cleaning device is a reversing video camera at the rear of the vehicle and oriented to image a road scene behind the vehicle, the cleaning head (8) being fixed inside the rear bumper (2) and the video camera (6) being adapted to adopt an active imaging position outside the bumper and a passive position inside the bumper, an opening (16) being provided in said bumper to allow the video camera to move from one position to the other.

13. The motor vehicle as claimed in the preceding claim, **characterized in that** the rear bumper (2) includes a substantially horizontal upper wall (12) and a substantially vertical front wall (14), the opening (16) for the video camera (6) to pass through being in said upper wall.

14. The motor vehicle as claimed in the preceding claim, **characterized in that** the video camera (6) is surmounted by a cap (28) with dimensions substantially equal to those of the opening (16) so as to cover said opening when the video camera is in the passive position.

15. The motor vehicle as claimed in the preceding claim, **characterized in that** the edges delimiting the opening (16) include a surface for supporting the cap set back from the external face of the upper wall.
